# EUROPÄISCHE PATENTSCHRIFT

(11) **EP 4 573 007 B1**
(45) Veröffentlichungstag und Bekanntmachung des Hinweises auf die Patenterteilung: **20.05.2026**
(21) Anmeldenummer: 24701186.9
(22) Anmeldetag: 18.01.2024
(51) Int. Cl.: B64D 11/06

(54) **AM FLUGBEGLEITERSITZ ABGESTÜTZTE SCHLAFLIEGE**
BED WHICH IS SUPPORTED AGAINST THE FLIGHT ATTENDANT SEAT
LIT SUPPORTÉ CONTRE LE SIÈGE D'UN MEMBRE D'ÉQUIPAGE DE VOL

(30) Priorität: 23.01.2023 DE 102023101497
(43) Veröffentlichungstag der Anmeldung: 25.06.2025
(73) Patentinhaber: Diehl Aviation Laupheim GmbH, 88471 Laupheim (DE)
(72) Erfinder: FIEDLER, Silvan, 89073 Ulm (DE); HAAS, Matthias, 88480 Achstetten (DE); MOKARI ASL, Hossein, 8020 Graz (AT); SEBASTIEN, Pauleau, 88483 Burgrieden (DE)
(74) Vertreter: Diehl Patentabteilung
(86) Internationale Anmeldenummer: PCT/EP2024/051090
(87) Internationale Veröffentlichungsnummer: WO 2024/156572

(56) Entgegenhaltungen:
- US-A- 2 599 606
- US-A- 3 898 704
- US-A1- 2008 006 740
- US-A1- 2018 273 185

## Beschreibung

Die Erfindung betrifft eine Schlafliege in einer Passagierkabine eines Passagierflugzeuges.

Aus der DE 10 2008 039 635 A1 sind derartige Schlafliegen in Form einer Liege-Anordnung bekannt, aufweisend ein erstes Trägerelement und eine Liegemöglichkeit. Die Liegemöglichkeit weist einen ersten Befestigungsbereich auf, welcher wiederum ein erstes Befestigungselement sowie ein zweites Befestigungselement aufweist. Die Liegemöglichkeit ist unter Verwendung des ersten und des zweiten Befestigungselementes am Trägerelement angebracht. Die Liegemöglichkeit ist zwischen einem ersten Zustand, in welchem die Liegemöglichkeit im Wesentlichen horizontal angeordnet ist, und einem zweiten Zustand verschiebbar bzw. verschwenkbar, wobei der Übergang zwischen dem ersten und dem zweiten Zustand als eine kombinierte Rotations- und Translationsbewegung erfolgt.

Aus der US 2022 / 0388660 A1 ist ein Ruhebereichssystem und ein Verfahren für eine Innenkabine eines Fahrzeugs bekannt, umfassend ein Monument und ein mit dem Monument verbundenes Bettmodul. Das Bettenmodul umfasst ein oder mehrere Betten. Das Bettmodul ist relativ zum Monument zwischen einer verstauten Position und einer ausgefahrenen Position beweglich.

Aus der WO 2020 / 222193 A1 ist ein multifunktionaler Bereich in einem Flugzeug oder einem anderen Passagiertransportfahrzeug bekannt, der auf verschiedene Weise verändert werden kann, um verschiedene Aktivitäten an verschiedenen Punkten einer Reise zu ermöglichen. Beispielsweise kann eine Konfiguration Sitzplätze für die Besatzung ermöglichen. Eine weitere Konfiguration kann einen Ruhebereich für die Besatzung ermöglichen.

Aus der US 2018 / 0273185 A1 ist eine Flugzeugkabinenanordnung bekannt, umfassend: mindestens einen Flugbegleitersitz, Hochkomfortsitz genannt, der eine Stauposition, eine Sitzposition und mindestens eine Ruheposition einnehmen kann, und mindestens eine Möbeleinheit, wobei der Hochkomfortsitz in einem in der Möbeleinheit vorgesehenen Raum eingebaut ist oder sich zumindest teilweise in einen in der Möbeleinheit angeordneten Raum erstrecken kann, wenn sich der Hochkomfortsitz in der Ruheposition befindet.

Aus der US 2008 / 0006740 A1 ist folgendes bekannt: Um Patienten an Bord während des Fluges auf möglichst geringem Raum notfallmedizinisch helfen zu können, weist ein Flugzeug beispielsweise eine Sitzvorrichtung auf, die einen ersten Abschnitt eines Liegepositionsbereichs bereitstellt, sowie eine Liegepositionsvorrichtung, die einen zweiten Abschnitt des Liegepositionsbereichs umfasst. Neben der Verwendung in Flugzeugen kann eine Liegevorrichtung, die beispielsweise eine Sitzvorrichtung, die einen ersten Abschnitt eines Liegepositionsbereichs bereitstellt, und eine Liegepositionsvorrichtung, die einen zweiten Abschnitt des Liegepositionsbereichs bereitstellt, umfasst, auch in anderen Transportfahrzeugen verwendet werden.

Aus dem US Patent 2,599,606 ist folgendes bekannt: In einem Eisenbahnwaggon mit einem Mittelgangboden sind zwei untere Räume vorhanden, deren Bodenniveau unterhalb des Gangbodens liegt, ein oberer Raum, dessen Bodenniveau höher als der Gangboden ist, wobei der obere Raum zwischen den unteren Räumen angeordnet ist und Endabschnitte aufweist, die über einen Fortsatz jedes der unteren Räume hinausragen, und wobei sich ein Bett im Wesentlichen über die gesamte Länge jedes dieser Räume erstreckt, wobei die Betten jeweils in ein Endstück des oberen Raums und in die Fortsätze der unteren Räume benachbart dem oberen Raum einziehbar sind.

Aus dem US Patent 3,898,704 ist eine umwandelbarer Sitz-Bett-Ausrüstung bekannt zum Umwandeln eines Liegesitzes in ein oberes und unteres Etagenbett in einer Flugzeugkabine. Aus der Sitzposition lassen sich Boden und Rückenlehne nach oben schwenken und die an der Rückenlehne schwenkbar angebrachten Beine lassen sich nach unten senken, um den horizontal verlängerten Boden und die Rückenlehne zu stützen und so die obere Koje zu bilden. Die Befestigung an der Unterseite erfolgt über einen Verschluss an der angrenzenden Wand. Die untere Liege besteht aus schwenkbar montierten Abschnitten, deren eines Ende auf einem Querträger an den Beinen der oberen Liege aufliegt. Der Mittelteil wird durch an der Wand montierte Halterungen gestützt und gesichert, die dazu dienen, die Sitzunterseite zu stützen und zu sichern, wenn die Sitzposition verwendet wird.

Aufgabe der vorliegenden Erfindung ist es, Verbesserungen bezüglich einer Schlafliege in einer Passagierkabine eines Passagierflugzeuges vorzuschlagen.

Die Aufgabe wird gelöst durch einen Kabinenabschnitt gemäß Patentanspruch 1 einer Passagierkabine eines Passagierflugzeuges. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Der Kabinenabschnitt ist mit anderen Worten bestimmungsgemäß dazu vorgesehen, in eine bestimmungsgemäße Passagierkabine eines bestimmungsgemäßen Passagierflugzeuges eingebaut zu werden bzw. ein Teil einer solchen Passagierkabine oder eines solchen Passagierflugzeuges zu werden.

"Bestimmungsgemäß" heißt, dass der Kabinenabschnitt auf eine bestimmte oder einen bestimmten Typ von Passagierkabine / Passagierflugzeug konstruktiv abgestimmt ist und für den Einsatz dort eingerichtet ist; z.B. für die dadurch bestimmten Geometrieanforderungen usw. ausgelegt ist. Mit anderen Worten wird insbesondere eine betreffende Passagierkabine / Passagierflugzeug als bekannt hinsichtlich seiner Geometrie, Größe, Materialeigenschaften usw. vorausgesetzt.

Gegenstand der Erfindung ist somit insbesondere auch eine Passagierkabine mit einem entsprechenden Kabinenabschnitt bzw. ein Passagierflugzeug mit der entsprechenden Passagierkabine.

Der Kabinenabschnitt enthält einen Flugbegleitersitz oder insbesondere auch mehrere. Der Flugbegleitersitz (kurz auch "Sitz") ist zwischen einem Nutzzustand und einem Stauzustand verstellbar. Im Stauzustand nimmt der Flugbegleitersitz eine platzsparende Konfiguration ein, eine Person kann jedoch dann nicht dort wie vorgesehen Platz nehmen. Im Nutzzustand ist der dazu eingerichtet, dass ein Flugbegleiter auf diesem Platz nehmen kann (oder prinzipiell auch jede andere Person). Die Verstellbarkeit ist eine Klappbarkeit, um eine horizontal verlaufende Klapp- bzw.

Schwenkachse. Horizontal bezieht sich hier auf den bestimmungsgemäßen Einbauzustand des Kabinenabschnitts in dem Passagierflugzeug und ein auf einem ebenen Untergrund ruhendes Passagierflugzeug. Mit anderen Worten ist der Flugbegleitersitz ein Klappsitz mit fest im Flugzeug montierter Rückenlehne und Grundgerüst, dessen bewegliche Sitzfläche zum Einnehmen des Stauzustandes nach oben klappbar ist.

Der Kabinenabschnitt enthält eine Schlafliege (oder Ruheliege / Bett, kurz auch "Liege") oder insbesondere auch mehrere. Derartige Liegen werden genutzt, damit sich Flugpersonal des Flugzeuges, wie z.B. Flugbegleiter, während längerer Flugzeiten dort ausruhen bzw. schlafen können. Derartige Schlafliegen sind nicht zu verwechseln mit Passagiersitzen, die ebenfalls eine Schlafposition aufweisen können. Auch die Schlafliege ist zwischen einem Nutzzustand und einem Stauzustand verstellbar. Es handelt sich (vergleichbar dem Klappsitz) um eine entsprechende Klappliege, die ebenfalls um eine horizontale Achse in den Stauzustand nach oben klappbar ist. Im heruntergeklappten Zustand bildet die Schlafliege eine insbesondere ebene (horizontal bei eben ruhendem Flugzeug) Liegefläche aus, auf der sich eine Person, insbesondere ein Flugbegleiter zum Schlafen bzw. Ausruhen hinlegen kann.

Der Kabinenabschnitt enthält einen Bodenabschnitt eines Fußbodens der Passagierkabine. Wenn sich sowohl der Flugbegleitersitz als auch die Schlafliege jeweils im Stauzustand befinden, liegt der Bodenabschnitt zwischen Flugbegleitersitz und Schlafliege. Mit anderen Worten befinden sich Flugbegleitersitz und Schlafliege an gegenüberliegenden Rändern / Enden des Bodenabschnitts und begrenzen diesen dort. Der Bodenabschnitt ist daher zum Betreten freigegeben. Mit anderen Worten können Personen den Bodenabschnitt betreten, passieren, als Durchgang nutzen usw.; sie sind durch Flugbegleitersitz und Schlafliege nicht hieran gehindert.

Im Nutzzustand des Flugbegleitersitzes ist der Bodenabschnitt von dem Flugbegleitersitz, insbesondere dessen Sitzfläche teilweise überdeckt. Befindet sich die Schlafliege im Nutzzustand, überdeckt diese (insbesondere deren Bewegungsabschnitt, siehe unten) den Bodenabschnitt zumindest teilweise, insbesondere vollständig. Jedenfalls überdecken Flugbegleitersitz und Schlafliege zusammen den Bodenabschnitt vollständig. Ein Betreten bzw. Passieren des Bodenabschnitts durch Personen ist dann regulär nicht mehr möglich.

"Begrenzen" und "Überdecken" ist in Bezug auf eine Normalenrichtung / Draufsicht / Projektion von Flugbegleitersitz / Schlafliege auf den als waagerecht eben angenommenen Fußboden der Passagierkabine im betreffenden Bereich zu verstehen.

Die Schlafliege ist, wenn sich diese im Nutzzustand befindet, auf dem Flugbegleitersitz abgestützt. Die Abstützung der Schlafliege auf dem Flugbegleitersitz kann auf jedem beliebigen Strukturteil des Sitzes stattfinden, z.B. auf dessen Rückenlehne oder einem Strukturteil eines Festrahmens.

Gemäß der Erfindung ergibt sich der Vorteil, dass zur Abstützung der Schlafliege keinerlei weitere Vorrichtungen vorgesehen sein müssen, wie z.B. separate Stützen an dieser. Der Flugbegleitersitz erfüllt somit eine Doppelfunktion, nämlich zur Aufnahme eines Flugbegleiters einerseits und zur Abstützung der Schlafliege andererseits. Insbesondere bilden diese beiden Möglichkeiten Alternativen, die nicht zusammen nutzbar sind.

Der Flugbegleitersitz führt zu zusätzlicher Stärke und Steifigkeit der Liege im Nutzzustand. Airlines erfüllen die Anforderung an Möglichkeiten zum Ausruhen für die Crew und sparen Kosten für zusätzliche Crew Kapazitäten. Prinzipiell könnten die Liegen auch von Passagieren gebucht werden. Es werden keine Passagiersitze für Crew geblockt. Es entsteht eine verbesserte Ruhemöglichkeit für die Crew in einem dafür vorgesehenen Bereich des Flugzeuges. Es ergibt sich ein Crew-Ruhe-Compartment mit kleinem Fußabdruck für optimierte Layout-Möglichkeiten.

In einer bevorzugten Ausführungsform ist die Schlafliege, wenn sich diese im Nutzzustand befindet, auf einer Sitzfläche des Flugbegleitersitzes abgestützt. Insbesondere befindet sich die Sitzfläche dabei im Nutzzustand. Mit anderen Worten nimmt dann nicht ein Flugbegleiter auf der Sitzfläche Platz, sondern die Schlafliege ruht auf der (insbesondere heruntergeklappten) Sitzfläche. Dies führt insbesondere zu einem besonders einfachen Vorgehen zur Abstützung der Schlafliege, indem nämlich lediglich der Flugbegleitersitz zunächst in den Nutzzustand gebracht werden muss, um dann die Schlafliege im Nutzzustand auf seiner Sitzfläche aufnehmen bzw. abstützen zu können.

In einer bevorzugten Ausführungsform enthält der Kabinenabschnitt einen Kabinenwandabschnitt. Dieser ist ein Wandabschnitt einer Kabinenwand der Passagierkabine. Der Abschnitt ist insbesondere ein Abschnitt der Waschraumwand. Der Flugbegleitersitz ist an dem Kabinenwandabschnitt fest montiert. Da dies die übliche Anbringungsweise von Flugbegleitersitzen ist, können herkömmliche Flugbegleitersitze bzw. herkömmliche Designs einer Passagierkabine bzw. eines Passagierflugzeugs genutzt werden, um die Erfindung umzusetzen. Mit anderen Worten muss lediglich in geeigneter geometrischer Ausrichtung zu einem bestehenden Flugbegleitersitz eine Schlafliege in einem Flugzeug bzw. einer Passagierkabine vorgesehen werden. Dies kann insbesondere im Rahmen eines Retrofit geschehen.

In einer bevorzugten Ausführungsform ist der Bodenabschnitt ein sich unmittelbar an eine Einstiegs- bzw. Eingangstür, also einen Einstiegs- / Eingangs- / Notausgangsbereich der Passagierkabine, anschließender Bodenabschnitt. Insbesondere ist die genannte Eingangstür Bestandteil des Kabinenabschnitts.

Mit anderen Worten ist der Bodenabschnitt ein Teil des Eingangsbereiches / Notausgangsbereiches der Passagierkabine. Ein derartiger Eingangsbereich ist während des Fluges eines Passagierflugzeuges in der Regel wenig bis ungenutzt insofern, dass dieser nicht oder nur selten passiert werden muss. Eine Überdeckung durch die Schlafliege ist somit in der Regel dort nicht störend.

Insbesondere habe handelt es sich um diejenige Eingangstür, die in Flugrichtung des Flugzeuges zuvorderst liegt. (Zum Beispiel "in Flugrichtung links vorne").

Insbesondere ist der Flugbegleitersitz in Flugrichtung des Passagierflugzeuges gesehen vor der Liege, also auf der dem Cockpit zugewandten Seite der Liege, angeordnet. Dies bezieht sich auf den bestimmungsgemäßen Einbau des Kabinenabschnitts in der Passagierkabine bzw. dem Passagierflugzeug. In Kombination mit der Einbausituation an der vordersten Eingangstür schließt sich somit der Passagiersitzbereich entgegen der Flugrichtung gesehen hinter der Liege an. Die Liege und der Flugbegleitersitz befinden sich also zwischen den Passagiersitzen einerseits und dem Cockpit andererseits. Bei einem Retrofit einer Liege in einem bestehenden Flugzeug ist es somit gegebenenfalls allenfalls nötig, die hinter der Liege liegenden Passagiersitze ein kleines Stück nach hinten zu versetzen, um ausreichend Platz für eine entsprechende Liege zu schaffen.

In einer bevorzugten Ausführungsform weist die Schlafliege bzw. deren Liegefläche / Liegeteil (ist zumindest im Nutzzustand konkret gebildet) zumindest einen Bewegungsabschnitt auf. "Zumindest" bezieht sich dabei auf den "...abschnitt" und ist so zu verstehen, dass auch die gesamte Liegefläche den Bewegungsabschnitt bilden kann. Der Bewegungsabschnitt ist im Stauzustand der Schlafliege gegenüber seiner Position im Nutzzustand verstellt. Mit anderen Worten ist der Bewegungsabschnitt ein bewegbarer / verstellbarer Teil der Schlafliege. Insbesondere ist der Bewegungsabschnitt in den Stauzustand hochklappbar, wie oben erläutert.

In einer bevorzugten Variante dieser Ausführungsform ist der Bewegungsabschnitt in sich nicht weiter verstellbar. Die "Verstellbarkeit" meint hier die Verstellung der Liege zwischen dem Nutzzustand und dem Stauzustand. Zum Beispiel ist der Bewegungsabschnitt selbst also nicht nochmals in sich klappbar / bewegbar, teleskopierbar usw. ausgestaltet usw. Ausgenommen hiervon ist gegebenenfalls eine Feinverstellung / Feinjustierung des Bewegungsabschnitts im Nutzzustand. Zum Beispiel kann dieser durchaus im Nutzzustand in gewissem Maße einstellbar / verstellbar sein, um zum Beispiel eine gewisse Neigungsverstellung (z.B. gewünschte Hochlagerung von Beinen) in einer Liegeposition zu ermöglichen. Mit anderen Worten ist die Verstellbarkeit des Bewegungsabschnitt als Ganzes die einzige Verstellbewegung, die notwendig ist, um die Schlafliege zwischen Nutzzustand und Stauzustand zu wechseln.

In einer bevorzugten Variante dieser Ausführungsform enthält die Schlafliege bzw. deren Liegefläche zusätzlich zu dem Bewegungsabschnitt einen Festabschnitt. Der Festabschnitt ist zwischen Nutzzustand und Stauzustand nicht verstellt / zu verstellen. Mit anderen Worten ist eine Verstellung des Festabschnitts nicht nötig, um die Liege zwischen Nutzzustand und Stauzustand zu verstellen. Auch hier kann jedoch gegebenenfalls - sinngemäß zu oben - eine Feinjustierung / Feineinstellung möglich sein, z.B. derart, dass es sich beim Festabschnitt um ein Kopfteil der Liege / Liegefläche handelt, welches in seiner Neigung verstellbar ist. Insbesondere bildet der Festabschnitt einen Liegebereich, der bestimmungsgemäß für Kopf oder Oberkörper einer Person vorgesehen ist, der Bewegungsabschnitt eine Liegefläche für den restlichen Körper bzw. Unterkörper.

In einer bevorzugten Ausführungsform enthält der Kabinenabschnitt ein Schrankmonument. Das Schrankmonument enthält die Schlafliege sowie einen ersten Wandabschnitt einer Schlafraumwand. "Enthält" ist hier vor allem auf den Stauzustand der Liege bezogen. Im Nutzzustand kann zumindest ein Teil der Liege auch aus dem restlichen Schrankmonument "herausragen". Die Schlafraumwand umgibt die Liege (oder auch mehrere Liegen, siehe unten) zumindest dann und zumindest teilweise, wenn sich diese im Nutzzustand befindet. Die Schlafraumwand kann optional auch mehrere Liegen umgeben. Die Schlafraumwand dient dazu, einer auf der Liege ruhenden Person Privatsphäre zu verschaffen. Mit anderen Worten umgrenzt der erste Wandabschnitt die Liege oder Liegen zumindest teilweise. Das Schrankmonument ist somit ein Kabinenmonument, insbesondere ein Stauschrankmodul, welches Staumöglichkeiten auch für weitere Gegenstände neben der Schlafliege bietet. Ein entsprechendes Monument kann optisch besonders ansprechend ausgestaltet werden, um die Schlafliege in der Passagierkabine zu integrieren.

Insbesondere kann das Schrankmonument mit notwendigen Systemen (Luft, Elektrizität) an dem PSC-Kanal (Passenger Service-Channel) der Hatracks (Überkopf-Staufächer) angeschlossen werden.

Insbesondere kann also der Platz zwischen der ersten Passagiersitzreihe und dem Türbereich für ein Schrankmodul in Form eines Staufachmoduls mit zwei integrierten Faltliegen genutzt werden.

Zum Ein- und Aussteigen der Passagiere und Evakuierung können die Faltteile der Liegen (Bewegungsabschnitte) leicht in das Schrankmodul zurückgeklappt / -gefaltet werden.

Das Schrankmodul weist also insbesondere noch wenigstens ein Staufach auf. So wird ein flexibler kleiner Fußabdruck (footprint) für das Schrankmodul / die Liegen geschaffen.

In einer bevorzugten Variante dieser Ausführungsform weist der erste Wandabschnitt ein Kabinenfenster auf. Das Kabinenfenster ist ein solches, das die Außenwand des Passagierflugzeuges durchsetzt. Von der Liege bzw. dem oben genannten Schlafraum, der von der Schlafraumwand umgrenzt ist, ist somit auch ein Blick nach außerhalb des Passagierflugzeuges möglich.

In einer bevorzugten Variante dieser Ausführungsform in Verbindung mit dem oben erläuterten Bewegungsabschnitt bildet der Bewegungsabschnitt im Stauzustand einen Gehäuseabschnitt eines das Schrankmonument umschließenden (zumindest wenn sich die Liege(n) des Schrankmonuments im Stauzustand befinden) Gehäuses. Mit anderen Worten weist das Schrankmonument dann im Stauzustand der Schlafliege ein insbesondere vollständig geschlossenes und somit optisch ansprechendes und zur Aufbewahrung von Staugut besonders geeignetes Gehäuse / Außenfläche / Umgrenzung auf.

In einer bevorzugten Ausführungsform ist die bisher genannten Schlafliege eine erste Liege. Der Kabinenabschnitt, insbesondere das Schrankmonument, enthält dann eine zweite (oder auch noch weitere) Schlafliege, die der ersten Schlafliege entspricht. Die zweite Schlafliege ist als ebenso eine erfindungsgemäße Schlafliege, wie sie bisher erläutert wurde. Beide oder mehrere Liegen können sich dabei auf demselben Flugbegleitersitz abstützen. Insbesondere enthält der Kabinenabschnitt jedoch einen zweiten (oder weitere) Flugbegleitersitze. Jede der Liegen stützt sich dann auf einem zugehörigen Sitz ab.

In einer bevorzugten Variante dieser Ausführungsform ist die zweite Schlafliege zumindest im Nutzzustand parallel und neben der ersten Liege angeordnet, wenn sich diese ebenfalls im Nutzzustand befindet. Mit anderen Worten kann so ein gleichwertiger Doppel- oder Mehrfach-Ruheraum bzw. -Liegeplatz für Kabinenpersonal geschaffen werden.

In einer bevorzugten Variante dieser Ausführungsform weist der Kabinenabschnitt, insbesondere das Schrankmonument, wenigstens eine Zwischenwand zwischen jeweils zwei der Liegen auf. Diese erstreckt sich insbesondere zumindest in einem bestimmungsgemäßen Kopf- oder Oberkörperbereich der jeweiligen Schlafliegen, um Privatsphäre auch zwischen einzelnen Schlafliegen zu schaffen. Die Zwischenwand ist also insbesondere Bestandteil des Schrankmonuments.

In einer bevorzugten Ausführungsform enthält der Kabinenabschnitt ein mobiles Trennelement. Das Trennelement ist zwischen einem Nutzzustand und einem Stauzustand verstellbar. Zumindest im Nutzzustand ist das Trennelement bzw. bildet zumindest ein Teil des Trennelements einen zweiten Wandabschnitt einer Schlafraumwand, wie sie oben bereits erläutert wurde. Hierbei kann es sich auch um tatsächlich die oben genannte Schlafraumwand handeln. Die Schlafraumwand umgibt also die Liege oder mehrere Liegen zumindest im Nutzzustand bzw. ist die Liege zumindest teilweise von der Schlafraumwand umgrenzt. Die Schlafraumwand umgrenzt daher einen Schlafraum oder Schlafbereich, in dem sich die Liegen befinden.

Das Trennelement ist insbesondere ein Vorhang (auch Faltwand usw.), der vor- oder zurückgezogen wird, um zwischen Nutzzustand und Stauzustand zu wechseln.

Insbesondere ist die Schlafraumwand gebildet durch den oben genannten ersten Wandabschnitt, den zweiten Wandabschnitt, die genannte Eingangstür und den Kabinenwandabschnitt hinter dem Flugbegleitersitz. So bildet diese (zusammen mit Decke und Boden im entsprechenden Abschnitt der Passagierkabine) einen vollständig geschlossenen Schlafraum, der besonders effektiv eine Privatsphäre für die auf der Schlafliege ruhenden bzw. sich im Schlafraum befindenden Personen bietet.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen, sofern sie in den Schutzbereich der nachfolgenden Ansprüche fallen.

Gemäß der Erfindung ergibt sich insbesondere eine klappbare Schlaf- / Liegemöglichkeit für Kabinenpersonal. Aus einem Stauschrankmodul lassen sich dabei während des Fluges zwei Liegeflächen für zwei Personen herausklappen, die sich auf den Sitzflächen zweier gegenüberliegender Flugbegleitersitze (CAS, Cabin Attendant Seat) abstützen. Die Erfindung beruht auf der Beobachtung, dass zunehmend Single Aisle Flugzeuge für Langstrecken eingesetzt werden; dadurch ergibt sich die Anforderung, Ruhemöglichkeiten für die Kabinenbesatzung an Bord zu haben.

Denkbar wäre es, Passagiersitze für die Crew (Flugbegleiter) zu reservieren und durch Vorhänge von der übrigen Passagierkabine abzutrennen. Die Sitze können jedoch somit nicht an Passagiere verkauft werden. Sie bieten in der Regel nur die Möglichkeit zum entspannten Sitzen, jedoch nicht die Funktion einer komplett horizontalen Liegefläche.

Die Erfindung beruht auf der Idee, auf relativ kleinem Platz, angrenzend an den Flugzeugeingangsbereich, insbesondere einen Stauschrank (Schrankmonument) zu installieren. Dieser beinhaltet zwei herausklappbare Anteile (Bewegungsabschnitt) von Liegeflächen, diese stützen sich auf den gegenüberliegenden Sitzflächen der Flugbegleitersitze (CAS) ab, zusätzlich Stützen für die Liegeflächen sind somit nicht notwendig.

Es entsteht ein Ruhebereich für zwei Flugbegleiter oder -begleiterinnen mit zwei Liegen zum Schlafen und Regenerieren. Dieser wird durch einen Vorhang (mobiles Trennelement) noch zusätzlich vom Gangbereich abgetrennt und schafft somit die notwendige Privatsphäre.

Der Vorteil ist: Es werden weniger Sitzplätze durch die Besatzung besetzt und können somit an die Passagiere verkauft werden. Es entstehen zwei vollständig horizontale Liegeflächen (Betten) im Vergleich zu Sitzen, die sich in der Regel nur durch die Neigung der Rückenlehnen etwas bequemer einrichten lassen. Die Liegeflächen sind schnell ein-und ausklappbar, wodurch eine flexible Nutzung des Bereichs (Bodenabschnitt) ermöglicht wird.

Die Erfindung beruht auf der Erkenntnis, dass der Bereich vor der Flugzeugtüre während des Fluges so sinnvoll genutzt wird. Durch die Nutzung der existierenden Flugbegleitersitze, der Sitzflächen als Auflagerpunkte für die ausklappbaren Liegeflächen, werden zusätzliche mechanische Elemente (Stützen) vermieden. Die schnell erforderliche Installation und Deinstallation der Liegeflächen ist gewährleistet. In hochgeklapptem, verstautem Zustand sind die Liegeflächen bündig mit der restlichen Stauschrankwand (Gehäuse), sodass ein aufgeräumter Gesamteindruck entsteht.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: einen Kabinenabschnitt einer Passagierkabine in einer Seitenansicht in Blickrichtung des Pfeils I in Fig. 2,
- Figur 2: den Kabinenabschnitt aus Fig. 1 in Draufsicht in Blickrichtung des Pfeils II in Fig. 1,
- Figur 3: einen alternativen Kabinenabschnitt in Schrägansicht mit heruntergeklappten Schlafliegen Seitenansicht in Blickrichtung des Pfeils III in Fig 5.
- Figur 4: den Kabinenabschnitt aus Fig. 3 mir hochgeklappten Schlafliegen,
- Figur 5: den Kabinenabschnitt aus den Figuren 4 und 5 in Blickrichtung des Pfeils V in den Figuren 3 und 4.

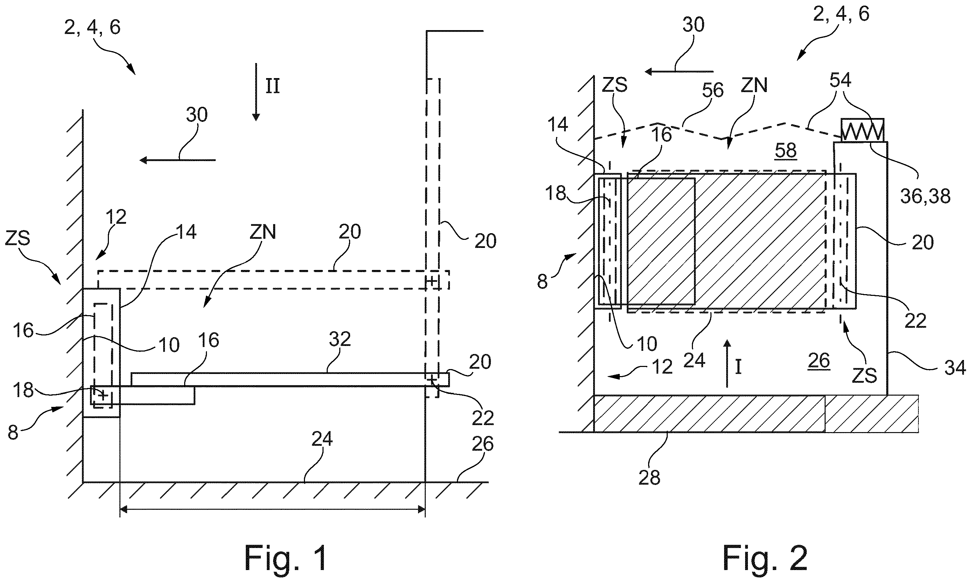

Figur 1 und Figur 2 zeigen einen Ausschnitt einer nicht weiter dargestellten Passagierkabine 2 eines Passagierflugzeuges 4. Der dargestellte Ausschnitt der Passagierkabine 2 enthält einen Kabinenabschnitt 6. Der Kabinenabschnitt 6 enthält einen Flugbegleitersitz 8, der an einem Kabinenwandabschnitt 10 einer Kabinenwand 12 der Passagierkabine 2montiert ist. Der Flugbegleitersitz 8 ist zwischen einem ausgezogen dargestellten Nutzzustand ZN und einem gestrichelt dargestellten Stauzustand ZS verstellbar. Für die Verstellbarkeit weist der Flugbegleitersitz 8 eine fest an der Kabinenwandabschnitt 10 montierte Grund- bzw. Trageinheit mit einer Rückenlehne 14 sowie eine Sitzfläche 16 auf. Die Sitzfläche 16 ist um eine in einer horizontalen Richtung verlaufende Klappachse 18 zwischen dem Nutzzustand ZN und dem Stauzustand ZS verstellbar, verschwenkbar bzw. klappbar, hier um 90°. "Horizontal" bezieht sich auf ein auf ebenem Untergrund ruhendes Passagierflugzeug 4.

Der Kabinenabschnitt 6 enthält außerdem eine Schlafliege 20, die ebenfalls (sinngemäß gilt die Beschreibung zum Flugbegleitersitz 8) zwischen einem Nutzzustand ZN (ausgezogen dargestellt) und einem Stauzustand ZS (gestrichelt dargestellt) verstellbar ist. Auch die Schlafliege 20 ist hierzu um eine Klappachse 22 um 90° klappbar.

Der Kabinenabschnitt 6 enthält weiterhin einen Bodenabschnitt 24 (in Figur 2 schraffiert und der Deutlichkeit halber etwas vergrößert dargestellt) eines Fußbodens 26 der Passagierkabine 2. Wenn sich der Flugbegleitersitz 8 einerseits und die Schlafliege 20 andererseits jeweils im Stauzustand ZS befinden, befindet sich der Bodenabschnitt 24 zwischen diesen beiden Elementen und ist zum Betreten durch Passagiere oder Flugbegleiter freigegeben. "Zwischen" bezieht sich auf eine senkrechte Projektion von oben bei horizontal eben ruhendem Flugzeug, siehe den Doppelpfeil in Fig. 1. Befindet sich der Flugbegleitersitz 8 im Nutzzustand ZN, überdeckt er den Bodenabschnitt 24 teilweise. Die Schlafliege 20 im Nutzzustand überdeckt dagegen den Bodenabschnitt 24 vollständig. Figur 2 zeigt die Draufsicht auf den Fußboden 26 und daher die vollständige flächige Überdeckung des Bodenabschnitt 24.

Die Schlafliege 20 im Nutzzustand ZN ist auf dem Flugbegleitersitz 8 abgestützt, was insbesondere in Figur 1 zu erkennen ist. Ausgezogen dargestellt ist hierbei, wie sich die Schlafliege 20 auf der Sitzfläche 16 des Flugbegleitersitzes 8 abstützt. In einer gestrichelten Alternative ist dargestellt, dass sich eine alternative Schlafliege 20 auf der Rückenlehne 14 bzw. einer entsprechenden Grundstruktur des Flugbegleitersitzes 8 abstützen könnte.

In Figur 2 ist zu erkennen, dass der Bodenabschnitt 24 ein sich unmittelbar an eine Eingangstür 28 des Passagierflugzeuges 4 bzw. Passagierkabine 2 anschließender Bodenabschnitt ist, mit anderen Worten ein Eingangsbereich, durch den nicht dargestellte Passagiere die Passagierkabine 2 betreten (Boarding) oder verlassen (Deboarding). Bezogen auf eine (Geradeaus-) Flugrichtung 30 des Passagierflugzeuges 4 liegt der Flugbegleitersitz 8 vor der Schlafliege 20.

In den Figuren 1 und 2 bildet die gesamte Schlafliege 20 einen Bewegungsabschnitt 32 der Schlafliege 20, welcher im Stauzustand ZS gegenüber dem Nutzzustand ZN verstellt ist, hier um die Klappachse 22 um 90° hochgeklappt ist. Der Bewegungsabschnitt 32 ist in sich nicht weiter verstellbar, ist hier im vorliegenden Beispiel der Figuren 1 und 2 ein im technischen Sinne mechanisch festes bzw. starres Bauteil (Flexibilität, Federung, Polsterung usw. einer Liegefläche der Schlafliege 20 ausgenommen). Zumindest ist der Bewegungsabschnitt 32 nicht weiter zu klappen, falten oder in sonstiger Weise zu verändern, um zwischen Nutzzustand ZN und Stauzustand ZS verstellt zu werden.

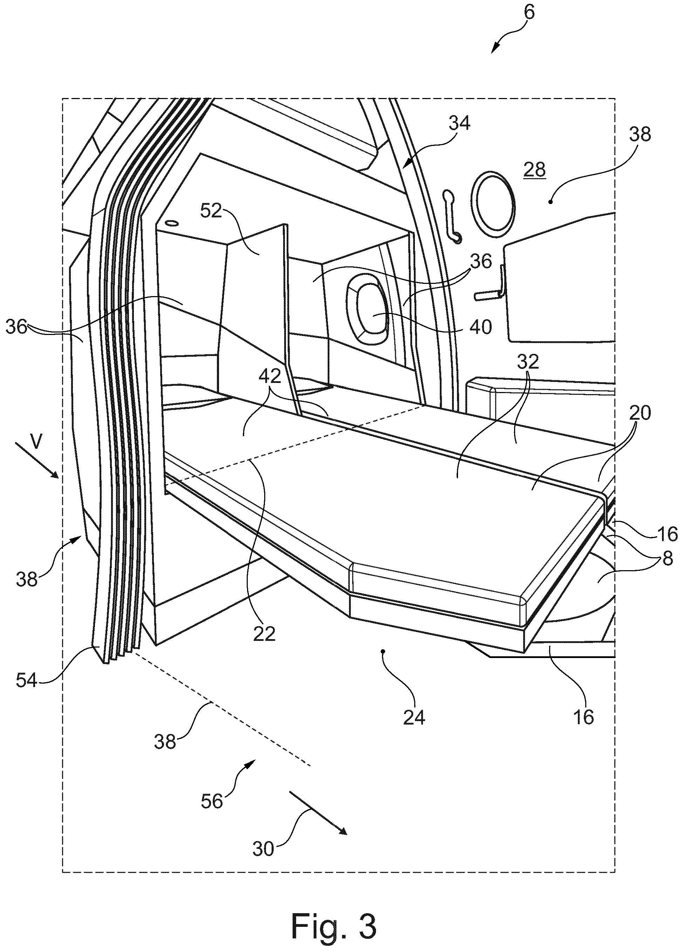

Figur 3 zeigt einen alternativen Kabinenabschnitt 6, der hier insgesamt zwei Schlafliegen 20 beinhaltet, sowie ein Schrankmonument 34. Das Schrankmonument 34 enthält die beiden Schlafliegen 20. Der Kabinenabschnitt 6 enthält auch zwei Flugbegleitersitze 8. Im dargestellten Nutzzustand ZN stützt sich jede der Schlafliegen 20 auf je einem der Flugbegleitersitze 8 ab. Dies erfolgt hier wieder entsprechend der Ausführungsform nach Figuren 1 und 2 auf den Sitzflächen 16 der Flugbegleitersitze 8.

Das Schrankmonument 34 enthält weiterhin einen ersten Wandabschnitt 36 einer Schlafraumwand 38 die Schlafraumwand 38. In ihrer Gesamtheit (siehe unten) umgibt die Schlafraumwand 38 die Schlafliegen 20 vollständig und schafft einen abgeschlossenen Schlafraum 58 in ihrem Inneren, in dem sich die Schlafliegen 20 befinden. Der erste Wandabschnitt 36 ist hier nach Art einer einseitig offenen Nische ausgebildet. Der erste Wandabschnitt 36 enthält auch ein Kabinenfenster 40, das die nicht näher bezeichnete Außenwand des Passagierflugzeuges 4 bzw. der Passagierkabine 2 durchsetzt.

In der vorliegenden Ausführungsform sind die Schlafliegen 20 jeweils zweigeteilt ausgeführt, was durch eine gestrichelte Linie angedeutet ist, die wieder der Klappachse 22 entspricht. Sie weisen also jeweils einen als Bein- oder Unterkörperbereich dienenden Bewegungsabschnitt 32 auf. Dieser wird wie oben erläutert zwischen dem Nutzzustand ZN und dem Stauzustand ZS verstellt (90°-Schwenk um die Klappachse 22). Jede der Schlafliegen 20 weist jedoch auch einen jeweiligen Festabschnitt 42 auf, der zum Wechsel zwischen Nutzzustand ZN und Stauzustand ZS nicht verstellt wird bzw. werden muss. Dieser bildet je einen Kopf- bzw. Oberkörperbereich der Schlafliegen 20.

Im Nutzzustand ZN ist die zweite Schlafliege 20 parallel und neben der ersten Schlafliege 20 angeordnet. Der Kabinenabschnitt 6, hier das Schrankmonument 34, enthält auch eine Zwischenwand 52 zwischen den beiden Schlafliegen 20. Diese befindet sich zwischen den jeweiligen Kopfbereichen der beiden Schlafliegen 20, die bestimmungsgemäß dafür vorgesehen sind, dass sich Personen in der entsprechenden Liegerichtung auf die Schlafliegen 20 legen.

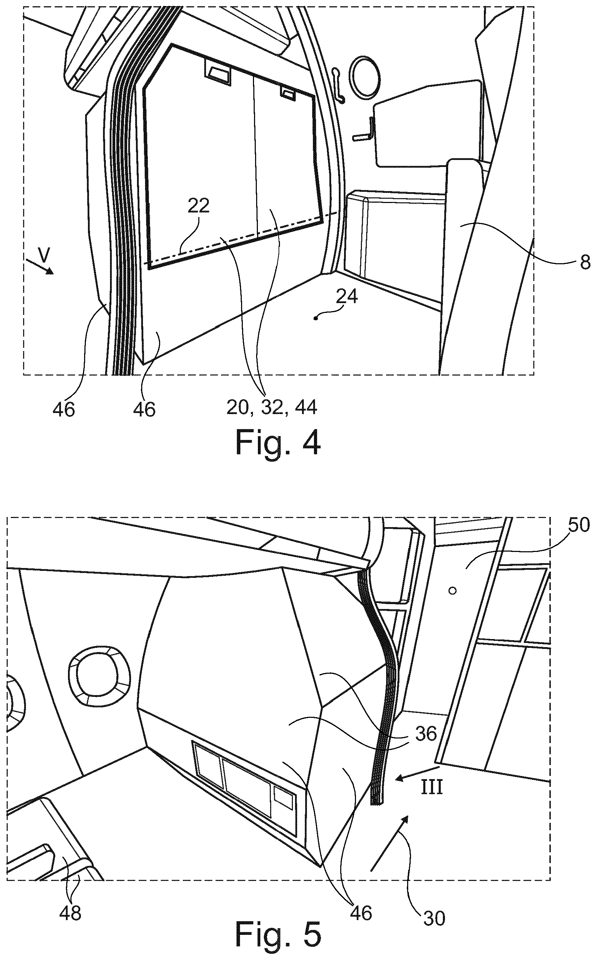

Figur 4 zeigt den Kabinenabschnitt 6 aus Figur 3, wobei sich sowohl die Flugbegleitersitz 8 als auch die Schlafliegen 20 nunmehr jeweils im Stauzustand ZS befinden. Die Bewegungsabschnitte 32 sind um die Klappachse 22 um 90° nach oben geklappt und bilden einen jeweiligen Gehäuseabschnitt 44 eines Gehäuses 46, welches das gesamte Schrankmonument 34 umgibt.

Figur 5 verdeutlicht das Gehäuse 46 durch einen Blick auf den in den Figuren 3 und 4 dargestellten Kabinenabschnitt 6 in Richtung des Pfeils V in Figs. 3 und 4, also schräg in Flugrichtung 30 gesehen. Mit anderen Worten ist hier das Schrankmonument 34 bzw. dessen Gehäuse 46 von seiner "Rückseite" aus zu sehen bzw. vom nicht näher erläuterten Passagierbereich der Passagierkabine 2 aus, in dem sich Passagiersitze 48 befinden. Der Kabinenabschnitt 6 befindet sich - in Flugrichtung 30 gesehen - am vordersten Ende der Passagierkabine 2, wie an der in Figur 5 dargestellten Cockpittür 50 zu erkennen ist.

Der Kabinenabschnitt 6 enthält weiterhin ein mobiles Trennelement 54, hier in Form eines Trenn-Vorhangs. Dieses ist in den Figuren 2 bis 5 in einem Stauzustand ZS gezeigt (in Fig. 2 ausgezogen). Gestrichelt ist in den Figuren 2 bis 3 auch der Nutzzustand ZN (also "vorgezogener Vorhang") symbolisch angedeutet (in Fig. 3 durch eine gestrichelte Linie der Schlafraumwand 38). In einem Nutzzustand ZN bildet das mobile Trennelement 54 einen zweiten Wandabschnitt 56 der Schlafraumwand 38, welche dann beide Schlafliegen 20 vollständig umgibt und somit einen abgeschlossenen Schlafraum 58 umgrenzt. Um die Schlafraumwand 38 zu bilden, wirken der erste Wandabschnitt 36 (Schrankmonument 34) und der zweiter Wandabschnitt 56 (zugezogener Vorhang) um der Kabinenwandabschnitt 10 sowie die Eingangstür 28 zusammen bzw. ergänzen sich zur Schlafraumwand 38. Somit umgibt die Schlafraumwand 38 die Schlafliegen 20 zumindest im Nutzzustand ZN vollständig und schafft Privatsphäre für Personen auf den Schlafliegen 20 bzw. im Schlafraum 58.

### Bezugszeichenliste

- 2: Passagierkabine
- 4: Passagierflugzeug
- 6: Kabinenabschnitt
- 8: Flugbegleitersitz
- 10: Kabinenwandabschnitt
- 12: Kabinenwand
- 14: Rückenlehne
- 16: Sitzfläche
- 18: Klappachse
- 20: Schlafliege
- 22: Klappachse
- 24: Bodenabschnitt
- 26: Fußboden
- 28: Eingangstür
- 30: Flugrichtung
- 32: Bewegungsabschnitt
- 34: Schrankmonument
- 36: erster Wandabschnitt
- 38: Schlafraumwand
- 40: Kabinenfenster
- 42: Festabschnitt
- 44: Gehäuseabschnitt
- 46: Gehäuse
- 48: Passagiersitze
- 50: Cockpittür
- 52: Zwischenwand
- 54: Mobiles Trennelement
- 56: zweiter Wandabschnitt
- 58: Schlafraum

- ZN: Nutzzustand
- ZS: Stauzustand

## Patentansprüche

1. Kabinenabschnitt (6) für eine Passagierkabine (2) eines Passagierflugzeuges (4),
- mit einem Flugbegleitersitz (8), der zwischen einem Nutzzustand (ZN) und einem Stauzustand (ZS) verstellbar ist, wobei der Flugbegleitersitz (8) ein Klappsitz mit einer Rückenlehne (14) und einem Grundgerüst ist, wobei die Rückenlehne (14) und das Grundgerüst dafür ausgebildet sind, fest im Passagierflugzeug (4) montiert zu sein, dessen bewegliche Sitzfläche (16) zum Einnehmen des Stauzustandes (ZS) um eine horizontal verlaufende Klappachse (18) nach oben klappbar ist,
- mit einer Schlafliege (20), die zwischen einem Nutzzustand (ZN) und einem Stauzustand (ZS) verstellbar ist, wobei die Schlafliege (2) eine Klappliege ist, die um eine horizontale Klappachse (22) in den Stauzustand (ZS) nach oben klappbar ist,
- mit einem Bodenabschnitt (24) für einen Fußboden (26) der Passagierkabine (2), der, wenn sich Flugbegleitersitz (8) und Schlafliege (20) jeweils im Stauzustand (ZS) befinden, zwischen Flugbegleitersitz (8) und Schlafliege (20) liegt, so dass sich Flugbegleitersitz (8) und Schlafliege (20) an gegenüberliegenden Enden des Bodenabschnitts (24) befinden und diesen dort begrenzen, und von diesen zum Betreten freigegeben ist,
- wobei der Bodenabschnitt (24) von dem Flugbegleitersitz (8) im Nutzzustand (ZN) teilweise und von der Schlafliege (20) im Nutzzustand (ZN) wenigstens teilweise, von beiden gemeinsam vollständig überdeckt ist,
- wobei die Schlafliege (20) im Nutzzustand (ZN) auf dem Flugbegleitersitz (8) abgestützt ist.

2. Kabinenabschnitt (6) nach Anspruch 1,
**dadurch gekennzeichnet, dass**
die Schlafliege (20) im Nutzzustand (ZN) auf einer Sitzfläche (16) des Flugbegleitersitzes (8) abgestützt ist.

3. Kabinenabschnitt (6) nach einem der vorhergehenden Ansprüche,
**dadurch gekennzeichnet, dass**
der Kabinenabschnitt (6) einen Kabinenwandabschnitt (10) einer Kabinenwand (12) der Passagierkabine (2) enthält und der Flugbegleitersitz (8) an dem Kabinenwandabschnitt (10) montiert ist.

4. Kabinenabschnitt (6) nach einem der vorhergehenden Ansprüche,
**dadurch gekennzeichnet, dass**
der Bodenabschnitt (24) ein sich unmittelbar an eine Eingangstür (28) der Passagierkabine (2) anschließender Bodenabschnitt (24) ist.

5. Kabinenabschnitt (6) nach einem der vorhergehenden Ansprüche,
**dadurch gekennzeichnet, dass**
der Flugbegleitersitz (8) in Flugrichtung (30) des Passagierflugzeuges (4) vor der Schlafliege (20) angeordnet ist.

6. Kabinenabschnitt (6) nach einem der vorhergehenden Ansprüche,
**dadurch gekennzeichnet, dass**
die Schlafliege (20) zumindest einen Bewegungsabschnitt (32) aufweist, der im Stauzustand (ZS) der Schlafliege (20) gegenüber dem Nutzzustand (ZN) verstellt ist.

7. Kabinenabschnitt (6) nach Anspruch 6,
**dadurch gekennzeichnet, dass**
der Bewegungsabschnitt (32) in sich nicht weiter verstellbar ist.

8. Kabinenabschnitt (6) nach einem der Ansprüche 6 bis 7,
**dadurch gekennzeichnet, dass**
die Schlafliege (20) zusätzlich zu dem Bewegungsabschnitt (32) einen zwischen Nutzzustand (ZN) und Stauzustand (ZS) nicht zwangsweise zu verstellenden Festabschnitt (42) enthält.

9. Kabinenabschnitt (6) nach einem der vorhergehenden Ansprüche,
**dadurch gekennzeichnet, dass**
der Kabinenabschnitt (6) ein Schrankmonument (34) enthält und das Schrankmonument (34) die Schlafliege (20) sowie einen ersten Wandabschnitt (36) einer Schlafraumwand (38) enthält, wobei die Schlafraumwand (38) die Schlafliege (20) zumindest im Nutzzustand (ZN) zumindest teilweise umgibt.

10. Kabinenabschnitt (6) nach Anspruch 9,
**dadurch gekennzeichnet, dass**
der erste Wandabschnitt (36) ein Kabinenfenster (40) aufweist.

11. Kabinenabschnitt (6) nach einem der Ansprüche 9 bis 10 in Verbindung mit einem der Ansprüche 6 bis 8,
**dadurch gekennzeichnet, dass**
der Bewegungsabschnitt (32) im Stauzustand (ZS) einen Gehäuseabschnitt (44) eines das Schrankmonument (34) umschließenden Gehäuses (46) bildet.

12. Kabinenabschnitt (6) nach einem der vorhergehenden Ansprüche,
**dadurch gekennzeichnet, dass**
der Kabinenabschnitt (6) eine zweite Schlafliege (20) enthält.

13. Kabinenabschnitt (6) nach Anspruch 12,
**dadurch gekennzeichnet, dass**
die zweite Schlafliege (20) zumindest im Nutzzustand (ZN) parallel und neben der ersten Schlafliege (20) im Nutzzustand (ZN) angeordnet ist.

14. Kabinenabschnitt (6) nach einem der Ansprüche 12 bis 13,
**dadurch gekennzeichnet, dass**
der Kabinenabschnitt (6) wenigstens eine Zwischenwand (52) zwischen jeweils zwei der Schlafliegen (20) aufweist.

15. Kabinenabschnitt (6) nach einem der Ansprüche 9 bis 14,
**dadurch gekennzeichnet, dass**
der Kabinenabschnitt (6) ein mobiles Trennelement (54) enthält, das zwischen einem Nutzzustand (ZN) und einem Stauzustand (ZS) verstellbar ist und das im Nutzzustand (ZN) ein zweiter Wandabschnitt (56) einer Schlafraumwand (38) ist, wobei die Schlafraumwand (38) die Schlafliege (20) zumindest im Nutzzustand (ZN) umgibt.

## Claims

1. Cabin section (6) for a passenger cabin (2) of a passenger aircraft (4),
- comprising a flight attendant seat (8), which can be adjusted between a state of use (ZN) and a stowed state (ZS), wherein the flight attendant seat (8) is a folding seat with a seat back (14) and a basic frame, wherein the seat back (14) and the basic frame are configured to be mounted in a fixed manner in the passenger aircraft (4), the movable seat bottom (16) of which can be folded upwards about a horizontally extending folding axis (18) to assume the stowed state (ZS),
- comprising a bed (20), which can be adjusted between a state of use (ZN) and a stowed state (ZS), wherein the bed (2) is a folding bed, which can be folded upwards about a horizontal folding axis (22) into the stowed state (ZS),
- comprising a floor section (24) for a floor (26) of the passenger cabin (2), which floor section is located, when the flight attendant seat (8) and the bed (20) are both in the stowed state (ZS), between the flight attendant seat (8) and the bed (20), such that the flight attendant seat (8) and the bed (20) are at opposite ends of the floor section (24) and delimit the latter there, and these make it available to be walked on,
- wherein the floor section (24) is partially covered by the flight attendant seat (8) in the state of use (ZN) and at least partially covered by the bed (20) in the state of use (ZN), and completely covered by both,
- wherein the bed (20) in the state of use (ZN) is supported on the flight attendant seat (8).

2. Cabin section (6) according to Claim 1,
**characterized in that**
the bed (20) in the state of use (ZN) is supported on a seat bottom (16) of the flight attendant seat (8).

3. Cabin section (6) according to one of the preceding claims,
**characterized in that**
the cabin section (6) contains a cabin wall section (10) of a cabin wall (12) of the passenger cabin (2), and the flight attendant seat (8) is mounted on the cabin wall section (10).

4. Cabin section (6) according to one of the preceding claims,
**characterized in that**
the floor section (24) is a floor section (24) directly adjoining an entrance door (28) of the passenger cabin (2).

5. Cabin section (6) according to one of the preceding claims,
**characterized in that**
the flight attendant seat (8) is arranged in front of the bed (20) in the direction of flight (30) of the passenger aircraft (4).

6. Cabin section (6) according to one of the preceding claims,
**characterized in that**
the bed (20) has at least one moving section (32), which is adjusted relative to the state of use (ZN) in the stowed state (ZS) of the bed (20).

7. Cabin section (6) according to Claim 6,
**characterized in that**
the moving section (32) is not capable of further adjustment within itself.

8. Cabin section (6) according to one of Claims 6 to 7,
**characterized in that**
in addition to the moving section (32), the bed (20) has a fixed section (42), which cannot be forcibly adjusted between the state of use (ZN) and the stowed state (ZS).

9. Cabin section (6) according to one of the preceding claims,
**characterized in that**
the cabin section (6) contains a cupboard monument (34), and the cupboard monument (34) contains the bed (20) and a first wall section (36) of a sleeping-space wall (38), wherein the sleeping-space wall (38) at least partially surrounds the bed (20), at least in the state of use (ZN).

10. Cabin section (6) according to Claim 9,
**characterized in that**
the first wall section (36) has a cabin window (40).

11. Cabin section (6) according to one of Claims 9 to 10 in combination with one of Claims 6 to 8,
**characterized in that**
in the stowed state (ZS), the moving section (32) forms a housing section (44) of a housing (46) surrounding the cupboard monument (34).

12. Cabin section (6) according to one of the preceding claims,
**characterized in that**
the cabin section (6) contains a second bed (20).

13. Cabin section (6) according to Claim 12,
**characterized in that**
the second bed (20), at least in the state of use (ZN), is arranged parallel and adjacent to the first bed (20) in the state of use (ZN).

14. Cabin section (6) according to one of Claims 12 to 13,
**characterized in that**
the cabin section (6) has at least one partition wall (52) between in each case two of the beds (20).

15. Cabin section (6) according to one of Claims 9 to 14,
**characterized in that**
the cabin section (6) contains a mobile dividing element (54), which can be adjusted between a state of use (ZN) and a stowed state (ZS) and which, in the state of use (ZN), is a second wall section (56) of a sleeping-space wall (38), wherein the sleeping-space wall (38) surrounds the bed (20), at least in the state of use (ZN).

## Revendications

1. Section (6) de cabine pour une cabine (2) d'un avion de ligne (4),
- présentant un siège (8) de personnel de cabine, qui est déplaçable entre une position de service (ZN) et une position de rangement (ZS), le siège (8) de personnel de cabine étant un siège pliant pourvu d'un dossier (14) et d'une structure de base, le dossier (14) et la structure de base étant conçus pour être montés solidement dans l'avion de ligne (4), l'assise (16) mobile dudit siège pouvant être rabattue vers le haut autour d'un axe de rabattement (18) s'étendant horizontalement afin de prendre la position de rangement (ZS),
- présentant une couchette (20), qui peut être déplacée entre une position de service (ZN) et une position de rangement (ZS), la couchette (2) étant une couchette rabattable qui peut être rabattue vers le haut autour d'un axe de rabattement (22) horizontal dans la position de rangement (ZS),
- présentant une section de fond (24) pour un plancher (26) de la cabine (2) qui, lorsque le siège (8) de personnel de cabine et la couchette (20) se trouvent respectivement dans la position de rangement (ZS), se trouve entre le siège (8) de personnel de cabine et la couchette (20) de telle sorte que le siège (8) de personnel de cabine et la couchette (20) se trouvent aux extrémités opposées de la section de fond (24) et limitent celle-ci, et que l'accès y est libre,
- la section de fond (24) étant recouverte partiellement par le siège (8) de personnel de cabine dans la position de service (ZN) et au moins partiellement recouverte par la couchette (20) dans la position de service (ZN) et complètement recouverte par les deux ensemble,
- la couchette (20) étant appuyée sur le siège (8) de personnel de cabine dans la position de service (ZN).

2. Section (6) de cabine selon la revendication 1,
**caractérisée en ce que**
la couchette (20) est appuyée sur une assise (16) du siège (8) de personnel de cabine dans la position de service (ZN).

3. Section (6) de cabine selon l'une des revendications précédentes,
**caractérisée en ce que**
la section (6) de cabine contient une section (10) d'une paroi (12) de la cabine (2) et le siège (8) de personnel de cabine est monté sur la section (10) de paroi de cabine.

4. Section (6) de cabine selon l'une des revendications précédentes,
**caractérisée en ce que**
la section de fond (24) est une section de fond (24) reliée immédiatement à une porte d'entrée (28) de la cabine (2).

5. Section (6) de cabine selon l'une des revendications précédentes,
**caractérisée en ce que**
le siège (8) de personnel de cabine est agencé, dans le sens de vol (30) de l'avion de ligne (4), devant la couchette (20).

6. Section (6) de cabine selon l'une des revendications précédentes,
**caractérisée en ce que**
la couchette (20) présente au moins une section mobile (32) qui, dans la position de rangement (ZS) de la couchette (20), est déplacée par rapport à la position de service (ZN).

7. Section (6) de cabine selon la revendication 6,
**caractérisée en ce que**
la section mobile (32) ne peut pas être déplacée davantage en soi.

8. Section (6) de cabine selon l'une des revendications 6 à 7,
**caractérisée en ce que**
la couchette (20) contient, en plus de la section mobile (32), une section fixe (42) qui n'est pas obligatoirement à déplacer entre la position de service (ZN) et la position de rangement (ZS).

9. Section (6) de cabine selon l'une des revendications précédentes,
**caractérisée en ce que**
la section (6) de cabine contient un placard de rangement (34) et le placard de rangement (34) contient la couchette (20) ainsi qu'une première section de paroi (36) d'une paroi (38) d'une chambre, la paroi (38) de chambre entourant au moins partiellement la couchette (20), au moins dans la position de service (ZN).

10. Section (6) de cabine selon la revendication 9,
**caractérisée en ce que**
la première section de paroi (36) présente un hublot (40).

11. Section (6) de cabine selon l'une des revendications 9 à 10, en association avec l'une des revendications 6 à 8,
**caractérisée en ce que**
la section mobile (32) forme, dans la position de rangement (ZS), une section de caisson (44) d'un caisson (46) entourant le placard de rangement (34).

12. Section (6) de cabine selon l'une des revendications précédentes,
**caractérisée en ce que**
la section de cabine (6) contient une deuxième couchette (20).

13. Section (6) de cabine selon la revendication 12,
**caractérisée en ce que**
la deuxième couchette (20) est agencée, au moins dans la position de service (ZN), parallèlement à la première couchette (20) et à côté de celle-ci dans la position de service (ZN).

14. Section (6) de cabine selon l'une des revendications 12 à 13,
**caractérisée en ce que**
la section (6) de cabine présente au moins une paroi intermédiaire (52) entre à chaque fois deux des couchettes (20).

15. Section (6) de cabine selon l'une des revendications 9 à 14,
**caractérisée en ce que**
la section (6) de cabine contient un élément de séparation (54) mobile qui peut être déplacé entre une position de service (ZN) et une position de rangement (ZS) et qui est, dans la position de service (ZN), une autre section de paroi (56) d'une paroi (38) de chambre, la paroi (38) de chambre entourant la couchette (20), au moins dans la position de service (ZN).
